# EUROPEAN PATENT SPECIFICATION

(11) **EP 0 417 117 B1**
(45) Date of publication and mention of the grant of the patent: **21.06.1995**
(21) Application number: 89904642.9
(22) Date of filing: 10.04.1989
(51) Int. Cl.: B60N 2/06

(54) **ARRANGEMENT FOR VEHICLE SEATS**
ANORDNUNG FÜR FAHRZEUGSITZE
AGENCEMENT POUR SIEGES DE VEHICULE

(30) Priority: 11.04.1988 SE 8801317
(43) Date of publication of application: 20.03.1991
(73) Proprietor: BRÖDERNA HAMMERSTEDT VERKSTADS AB, S-350 03 Växjö (SE)
(72) Inventor: MORICHETTO, Michele, S-416 72 Göteborg (SE)
(74) Representative: Mossmark, Anders
(86) International application number: SE8900185
(87) International publication number: WO8909707

(56) References cited:
- EP-A- 0 096 632
- EP-A- 0 171 660
- DE-A- 826 552
- DE-A- 3 409 582
- DE-A- 3 631 791
- DE-B- 2 716 549
- FR-A- 7 433 106
- FR-A- 7 900 012
- GB-A- 754 290
- SE-A- 428 194
- US-A- 4 602 758
- Patent Abstracts of Japan, vol. 7, no. 237, (M-250), 27 July 1983 & JP-A-126 228

## Description

### TECHNICAL FIELD:

The present invention relates to an arrangement for vehicle seats, and the arrangement more specifically relates to an underbody intended for a vehicle seat as per the preamble of claim 1 (see for example US-A-4 602 758).

### PRIOR ART:

Vehicle seats of the type to which the present invention relates are provided with a number of adjustment possibilities. These are obtained by means of the seat and its underbody being divided into three main parts which are movable with respect to each other: the first consisting of a floor attachment, the second consisting of a displaceable carriage supported by the latter, and the third constituting a seating and back-support unit whose lower part is fixed on the carriage and which can be moved between different heights and inclinations. The invention relates to a design of the two first-mentioned units, that is to say the attachment and the carriage.

These two units are to be displaceable with respect to each other so that the seating and back-support unit can assume different positions in the longitudinal direction of the vehicle and can be locked in these positions. They should be able to withstand very great forces and also hold the seating and back-support unit secure against these forces. Such great forces can occur upon collision, and it must be reliably ensured that the vehicle seat or parts thereof will not break off upon collision and cause the person using the seat to be thrown by the acceleration forces. It is now customary for the seat belt, which is used in most vehicles, to be fixed to the seat construction itself, and the underbody must then absorb the entire mass force from the seat as such and from the person sitting in the latter, and it may either be broken by these forces, deformed in an uncontrollable manner or break off from the supporting structure of the vehicle. The said requirements will be achieved by means of a design which permits reasonable production costs.

In order to satisfy the said requirements and aims, it is known to design the floor attachment as rails of rolled sheet-metal (compare DE-A-3 631 791 [A1]) with the necessary attachment pieces securely welded. The carriage is also made of sheet-metal and, in order to achieve good slidability with low resistance, it cooperates, on the one hand, with a needle bearing of the linear type for supporting the weight and, on the other hand, with two ball rows which run along linear tracks in order to hold the carriage fixed against upwardly and laterally directed forces. In this known arrangement, high precision is required in order for the roller bearing described to acquire exactly the correct play which will provide the necessary mobility but at the same time prevent any looseness, something which could lead to rattling during movement of the vehicle. However, this precision is difficult to achieve with the said production method, since the positions of the sheet-metal sections in relation to each other are dependent on the machining characteristics of different supply parts of sheet-metal, for which reason constant adjustments of the instruments have to be carried out in the production process, as well as constantly repeated measurement operations. This naturally makes production more expensive.

It would be desirable if another production method could be used, in particular for the profile manufacture. Of advantage in this respect is the extrusion of metals, such as aluminium; steel profiles for this purpose cannot be manufactured in this way.

In US-A-4 602 758 and JP-A-58-126 228 (corresponding to US-A-4 533 107) are shown vehicle seat arrangements including profiles evidently made by extrusion. Thereby the profiles are provided with tongue-shaped portions which are used for securing the profiles to the vehicle structure respective to the carriage by means of bolting or riveting.

### TECHNICAL PROBLEM:

However, it has been found that there are considerable difficulties in achieving the same degree of strength, wear - resistance and reliability with materials open to extrusion, which it is possible to achieve with steel profiles.

### SOLUTION:

The said problem is solved by means of the technical features disclosed in the characterizing part of claim 1. The profile, which constitutes a guide, has a U-shape with a bottom portion and two flanges, is provided with grooves on the outsides of the flanges and positioned opposite to each other. This U-profile forming the guide is produced by extrusion in a material suitable for this production method. Securing means, preferably one at each end of the guide, are provided to secure the guide to the vehicle. This in cross-section having U-shape with a bottom provided to be attached to the vehicle, preferably its floor, and flanges ending in inwards bent portions and being manufactured by sheet-rolling preferably in steel. The guide and the securing means are secured to each other in a position in which the flanges of the securing means are situated outside the respective flanges of the guide with said bent portions in engagement with said respective grooves of the guide. The guide and the securing means are thereby in contact with each other along almost the entire length of the said bent portions of the respective securing means.

### ADVANTAGES:

The present invention provides an arrangement for vehicle seats and, more specifically, an underbody comprising the floor attachment and the carriage consisting of rails and associated slides, in which arrangement the use of extruded metal profiles is permitted and, despite this, the said requirements can be satisfied fully.

### DESCRIPTION OF FIGURES:

An embodiment of the invention will be described below with reference to the attached drawings in which
- Fig. 1: shows a partially broken view of a rail designed according to the invention with associated slide and, indicated by dot-and-dash lines, a seating and back-support unit supported by the underbody in which the rail and slide are incorporated;
- Fig. 2: is a view showing only the rail and the slide from the front, that is to say from the left in Fig. 1, with certain parts omitted;
- Fig. 3: is a section, along the line III-III in Fig. 2, of one end of the rail; and
- Fig. 4: is a detail from Fig. 1 and, like Figs. 2 and 3, is on a larger scale than in Fig. 1.

### PREFERRED EMBODIMENT:

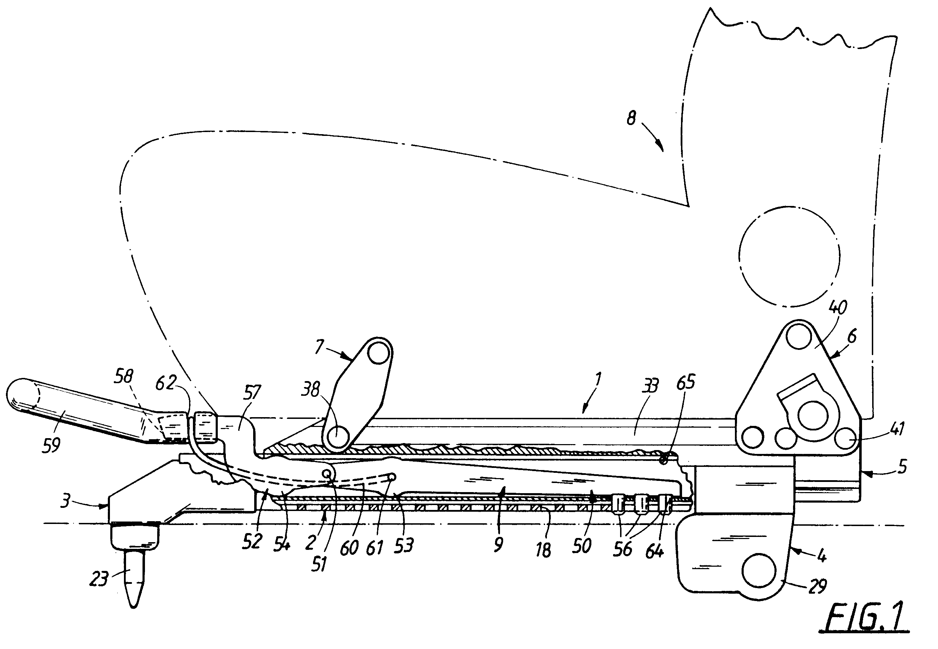

In the following text 1 designates a unit consisting of a rail 2 with a front securing means 3 and a rear securing means 4 and a slide 5 with a front carrier 7 and a rear carrier 6 for a seating and back-support unit 8, which is indicated by dot-and-dash lines in Fig. 1, but only with the lower part of the back-support shown. In addition to this, the unit 1 comprises a locking device 9 for locking the slide 5 on the rail 2.

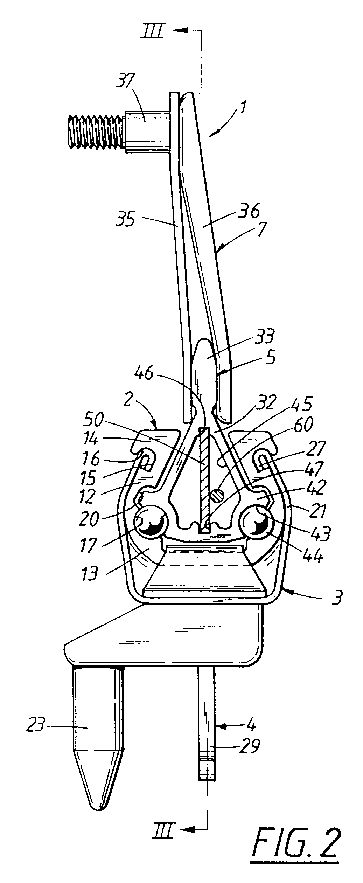

The profile of the rail 2 emerges from Fig. 2. Its overall shape may be said to resemble a U with its flanges turned inwards. These flanges thus form the legs of the profile, which flanges are designated 12 and are connected by means of a bottom part 13. At its centre the bottom part 13 is flat on both the outer and inner side and merges along an external radius into the flanges 12. The legs are each finished with a top portion 14 in whose underside a groove 15 is formed with an upper, undercut notch 16.

On the inside the profile is provided with a ball groove 17 at the lower part of each flange 12. Above each of the ball grooves a shoulder 20 projects inwards into the profile space.

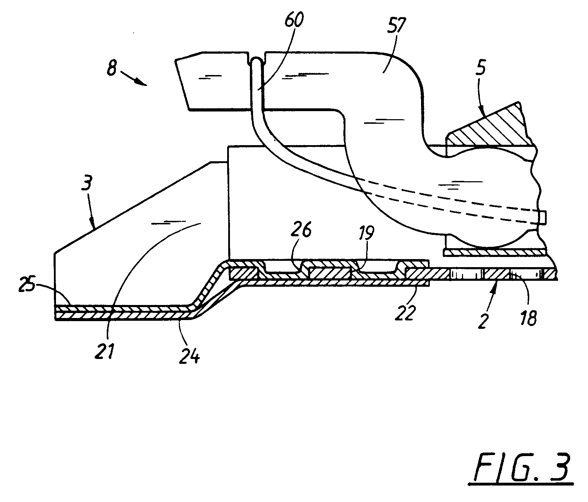

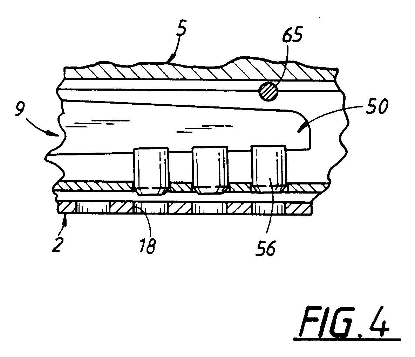

The profile form shown extends along the entire rail 2 and can therefore be made by means of extrusion, for example of light metal. As emerges from Fig. 1, for example, the profile has straight, cutoff ends and, in addition, after its extrusion it is machined only to the extent that it is provided with a number of holes 18 (Figs. 1, 3, 4) between the attachments (securing means) 3 and 4 and, at each end, two holes 19 (Fig. 3). All the holes 18 are the same size and are smaller than the holes 19.

The holes 19 are intended for securing the two securing means 3 and 4. These each consist of a U-shaped outer part 21 (Fig. 2). This has a bottom part 22 (Fig. 3) which is flat and intended to bear against the bottom 13 of the rail 2.

The attachments consist of a further sheet-metal part, which is called the inner part 25. It lies inside the outer part 21 and follows its bottom contour to a large extent. It is welded on the part 21 and is provided with depressed cups 26, which extend through the holes 19 to a welding seam is made. The attachments are intended to be made of sheet steel, which gives good welding conditions. By virtue of the fact that the parts 21 and 25 are connected through the holes 19 in the rail 2, the securing means 3 and 4 are held securely on the rail and cannot be pulled out in the longitudinal direction of the rail. Moreover, the attachments are fixed in the vertical direction of the rail by means of the outer part 21 having bent end parts 27, which extend into the groove 15 of the rail and into the respective notch 16. The part 27 bent into the groove 15 thus means that the rail cannot be pulled out from the outer part 21, and at the same time the bearing inside the notch 16 prevents the outer part 21 from opening and allowing the rail to pass through.

Furthermore, the securing means are adapted to the fixation system which is used for securing the rail to the floor of the vehicle. Here (Figs. 1 and 2) the securing means 3 is shown to have an orientation member 23 in the form of a peg, which will extend through the floor of the vehicle and is welded on a downward-turned outer part 24 connected to the part 21.

The securing means 4 is also secured by welding together an outer and an inner part. However, its attachment member has a different design from that of securing means 3. Here, a tongue 29 is shown provided with a hole.

The slide 5 also consists of a profile which is intended to be extruded, advantageously of light metal. It has a lower, triangular part 32 (Fig. 2) which, at the top, merges into a flange 33. In the flange 33 a front hole is made for the front attachment 7, which is designed as a lever with two parts 35 and 36 which enclose the flange 33 and are connected at their outer ends, where an attachment member 37 in the form of a threaded stud screw is welded securely. The front attachment 7 is also assumed to be made of steel, like the rear attachment 6. Through the hole in the flange 33, and in corresponding holes in the two parts 35 and 36 of the attachment, there extends a rivet 38 which holds the attachment 7 securely on the flange and, thus, on the whole slide 5. The riveting is carried out in such a way that the attachment 7 is pivotable.

In contrast, the rear attachment 6 is not pivotable and consists of two triangle-shaped plates 40, which are secured on the flange 33 by means of a number of rivets 41. Moreover, the attachment 6 is provided with holding devices which are adapted to the design of the seating and back-support part 8. The attachments 6 and 7 are in fact intended to secure the unit 8 which, as has been mentioned, is to be adjustable to various heights and inclinations with respect to the underbody. The part 8 is in this respect supported by two arrangements 1, one on either side, which are mirror-inverted with respect to each other. However, since the rail 2 and the slide 5 are symmetrical, this does not entail any differences as regards these components between the arrangements 1 on both sides. It is therefore only the securing means 3, 4 and the front and rear attachments 6, 7 which are different on both sides.

How the unit 8 is arranged and secured on the attachments or the arrangement 1 and how the arrangement 1 is secured on the vehicle floor does not form part of this invention. Therefore, this will not be described in detail, except for examples of how the floor securing means 3, 4 and attachments 6, 7, which are necessary per se, for the seating and back-support unit 8 can be designed.

The lower profile part 32 of the slide 5 is designed, at its outer, lower sides, with two ball grooves 43 which, when the rail 2 and the slid 5 are joined together, lie opposite the ball grooves 17 in the rail, so that two rows of balls 44 can be introduced into the grooves. The grooves 17 and 43, which each cover slightly less than a 180° arc, are angled in such a way that the balls 44 form a support between the rail 2 and the slide 5. If, then, the slide 5 is pressed downwards, it comes to bear against the balls and can be moved to and fro by means of the latter rolling along the grooves, and the balls also prevent the slide from being lifted out of the rail or turned. Above the ball grooves 43 there are projections 42 with upper surfaces which are positioned opposite the shoulders 20 of the rail 2.

A space 45 is formed within the part 32 of the profile of the slide 5, the upper and lower ends of which space are provided with grooves 46 and 47.

Of the linear roller bearing in which the balls 44 are incorporated, the end view in Fig. 2 shows only the outermost balls. The bearing can be provided with, in addition to the balls, a ball distancing member which keeps the balls at a distance from each other. How such ball distancing members are arranged is, however, well known and is therefore not shown. It is also assumed that end stops have been provided for the rows of balls, so that the latter cannot leave the grooves. These stops can be designed as studs projecting into the grooves at the ends of the rail 2. However, the ball-stops have not been shown either.

The profile 2 is produced with minus dimensions between the ball grooves and springs apart upon assembly of the profile 5 together with the balls. In this way, pretensioning of the linear roller bearing is obtained, and this results in excluding play, i.e. no rattling.

With only two rows of balls, there is only one dimension requiring precision (= the distance between the rows). Furthermore, the tolerance requirement is reduced by means of the spring action.

The locking device 9 is shown in Fig. 1 among others. It consists of an inner lever 50 which is connected to an outer lever 52 by means of a rivet 51 acting as a pivot bearing. The whole lever 50 and a large part of the lever 52 are located inside the space 45 of the slide 5 (Fig. 2). Both levers are provided with rounded parts 53 and 54, respectively, which in pairs constitute parts of one and the same circle line. These rounded parts 53, 54 are fitted in the grooves 46, 47 (Fig. 2) and, by sliding in the grooves, allow the levers 50, 52 to be pivoted in a vertical plane, which extends through the grooves 46, 47.

At its innermost end the lever 50 is provided with three pegs 56, whose outer diameters are adapted for introduction into three of the holes 18. The attachment of pins on the lever 50 is advantageously effected in such a way that the arm is provided with three projecting pegs designed in conjunction with the stamping out of the whole lever, over which the pegs 56, which have a tubular form, are placed and secured by welding. The locking device is in fact assumed to be made of steel and, as has been mentioned, the lever 50 and the lever 52 by stamping.

One of the three studs 56 can have a slight oversize, which provides for good fitting in the hole in the respective profile. Thus, play is excluded during normal use. The two other holes in the profile 5 can be made with high diameter tolerance, and distribution errors both between these three holes and between all the holes 18 is permissible. In the event of strong forces, deformation takes place and leads to all the studs becoming force-absorbing.

An outer part 57 of the lever 52 extends out of the slide 5 and forms an outer peg 58 which is intended to be acted on by a tube 59.

The tube 59 has a U-shape and extends along the whole front edge of the seat part and connects the pegs 58 to the two locking devices belonging to the two arrangements 1 which, as has been mentioned, are positioned on opposite side-edges of the vehicle seat. The tube 59 thus forms a frame, which is easily accessible for raising when the locking device is to be released.

Furthermore, the locking device comprises a spring 60, with an inner end which is curved to form a peg, which is introduced into a hole 61 in front of the parts 53 in the lever 50. Moreover, the spring 60 is bent in such a way that it goes under the locking arms in front of the rivet 51. An outer end of the spring 60 is bent around the peg 58 and thus also surrounds the end of the tube 59, which end is advantageously flattened. A groove 62 is arranged at both ends of the tube, and a corresponding groove also in each of the pegs 58. In this way the outer end of the spring 60 locks the two ends of the tube on the respective locking devices 9.

Before assembly the locking device 9 is intended to be joined together with the two levers 50 and 52 by means of the rivet 51, in addition to which the spring 60 is secured, but not the tube 59, with the spring 60 lying in the groove of the peg 58. By means of holding the two levers slightly turned together upwards against the action of the spring 60, the studs 56 can be introduced sliding along the bottom of the slide 5 until they snap down into three holes 64 which are arranged in this bottom. During the latter part of the insertion movement, the parts 53, 54 slide in the grooves 46, 47. Securing the locking device 9 so that it cannot be pulled out is finally achieved by means of a pin 65 being driven into a hole through the slide 5. When the studs 56 have snapped into the holes 64, the locking device is assembled, and when the whole vehicle seat is fitted together, the tube 59 can be pushed on the pegs of the arrangements 1 with secure snapping by means of the outer part of the spring 60.

In the use state the arrangement 1 is assembled in the state shown essentially in Fig. 1. Such an arrangement thus supports the seating and back-support part 8 on each side of the same and connects it to the floor of the vehicle, through which floor the orientation member 23 and the attachment member 29 are inserted. As has been described, the two main parts, the rails 2 and the slide 5, are kept in position with respect to each other by means of the balls 44 engaging in the grooves 17 and 43. In the longitudinal direction the two parts are locked on each other by means of the three studs 56, which extend through the holes 64, being snapped down into three of the holes 18 and held there by the spring 60.

When the seat is to be moved forwards or backwards, the person sitting in the seat grasps the frame, which the tube 59 forms, and pulls it upwards against the action of each spring 60. In this way the end of the arm 52 with the rivet 51 swings downwards, and the end of the arm 50 also does the same, because the rivet connects the two ends. In this respect the inner part of the arm 50 with the studs swings upwards to bear against the pin 65 in a position in which they are moved out of the holes 18 in the rail 2 but not out of the holes 64 in the slide 5. Now there is nothing to prevent longitudinal displacement of the slide, and this takes place by means of the rolling of the balls 44. When the desired position has been reached, the tube 59 is let go and the spring 60 swings the arm system so that the studs 56 are pushed downwards, and as soon as they reach a position opposite three of the holes 18 in the rail, they snap down into these and lock the two parts together again. If the studs 56 are not positioned opposite any holes when the tube 59 is let go, the snapping down takes place when the slide, by means of a slight adjustment movement, has been given the possibility of doing this.

If the vehicle in which the arrangement is assembled is subjected to a collision, the vehicle seat is generally subjected to forces in the forwards and/or backwards and upwards directions. In the two first-mentioned force directions, the rail 2 and slide 5 are held together by means of the three strong studs 56 extending through holes in both these parts. The movement parts of the locking device 9 are therefore not subjected to any actual forces, but of the locking device it is only the studs 56 which absorb any forces, and these essentially in the form of shear forces. This makes for a strong connection.

The forces which are directed upwards seek to pull the slide 5 out of the rail 2 and to break the attachments 6, 7 and the securing means 3, 4 away from the slide and rail. As regards the separation of the slide and the rail, the balls 44 first act against this by virtue of the fact that the grooves 17, 43 are not open in any direction for the balls. The material parts which are used to hold the rail and slide together are, however, relatively small, since the balls only grip in lines. Therefore, the possibility cannot be ruled out that, in the event of great forces, the material of the profiles will be stressed so hard that the balls migrate outside the ball races. If this takes place upon an upwardly directed force, then, when the slide moves in the rail, the upper part of its projecting parts 42 will come to bear against the shoulders 20 in the rail 2. In this way a bearing surface extending in the holes longitudinal direction of the slide is formed on both sides. Now extremely strong forces are needed before the slide can be pulled out. It has been observed that, in the event of such upwardly directed forces as can occur, the rail 2 is subjected to a bending stress, which means that it is bent in an arc upwards between its securing means 3 and 4. Because the centre of gravity line of each leg lies closer to the centre line of the profile than the material reduction designed as a fulcrum on the ball race, the legs 12 close upon bending of the rail, which makes extraction of the slide still more difficult.

Other stressed points are the fixation points of the securing means 3 and 4 in the rail. However, in this connection, the inward-bent parts 27 in the grooves 15 cooperate with the strong bottom securing means according to Fig. 3. The notch 16 holds the outer part 21 of the attachment in the groove 15, and, if the flanges 12 of the rail profile close, the securing means consisting of sheet-metal participates in this movement by means of the locking in the grooves 15. The entire flange 33 is available for securing the seating and back-support unit 8, and it is possible to make use of even larger material parts for absorbing the stresses which arise.

The arrangement according to the invention can be designed in other ways than that shown and described, provided that they do not depart from the scope of the invention as defined by the appended claims. The two main parts designed as profiles, the rail and the slide, do not necessarily have to be combined with the attachments, securing means or locking device chosen in the embodiment. It should also be mentioned that the design of the slide can readily be adapted to an existing securing of the attachment, in which certain adjustment functions are effected by means of parts which are arranged inside the contour of the slide. The profile of the slide can therefore be designed in two parts which are joined together and form an intermediate space in which the said parts can be inserted.

## Claims

1. Arrangement for vehicle seats, which are provided with an underbody (1), connecting the seat (8) to the main part of the vehicle, preferably via its floor, and including a guide (2) having a U-shaped cross-section with a bottom portion (13) and two flanges (12), said guide (2) being provided with grooves (15) on the outsides of the flanges (12) and positioned opposite to each other, said guide (2) being secured to the vehicle by securing means (3, 4), and a slide (5) provided to be connected to the seat, the guide (2) and the slide (5) being connected by means of a linear bearing (17, 43, 44) of the roller type thereby forming a slide unit of the underbody (1), **characterized** in the U-profile forming the guide (2) being produced by extrusion in a material suitable for this production method and in the securing means (3, 4) in cross-section each having U-shape with a bottom part (22) provided to be attached to the vehicle, preferably its floor, and flanges (21) ending in inwardly bent portions (27), the securing means (3, 4) being manufactured by sheet-rolling preferably in steel, the guide (2) and the securing means (3, 4) being secured to each other in a position in which the flanges (21) of the securing means (3, 4) are situated outside the respective flanges (12) of the guide (2) with said bent portions (27) in engagement with said respective grooves (15) of the guide (2), so that the guide (2) and the securing means (3, 4) are in contact with each other along almost the entire length of the said bent portions (27) of the respective securing means (3, 4).

2. Arrangement according to claim 1, **characterized** in that said U-profile forming the guide (2) has the outer edges of the flanges (12) inclined towards each other and in that the connection between the guide (2) and the slide (5) via said linear roller-bearing (17, 43, 44) is positioned adjacent the bottom (13) of the profile at each intersection between the bottom and the respective flange, whereby, if the slide (5) is subject to great forces in a direction away from the guide (2) and the latter will be bent in a bow away from its securing means, then the flanges (12) of the guide will have the tendency to close around the slide in between them.

## Patentansprüche

1. Anordnung für Fahrzeugsitze, die mit einem den Sitz (8) mit dem Hauptteil des Fahrzeugs, vorzugsweise über dessen Boden, verbindenden Unterkörper (1) versehen sind, der eine Führung (2) mit U-förmigem Querschnitt mit einem unteren Abschnitt (13) und zwei Flanschen (12) aufweist, wobei die Führung (2) mit einander gegenüberliegenden Rillen (15) auf den Außenseiten der Flansche (12) versehen ist und die Führung (2) über Befestigungsmittel (3, 4) an dem Fahrzeug befestigt ist, sowie weiter einen Schlitten (5), der mit dem Sitz verbunden werden kann, aufweist, wobei die Führung (2) und der Schlitten (5) mittels eines Linear-Rollenlagers (17, 43, 44) miteinander verbunden sind, wodurch eine Schlitteneinheit des Unterkörpers (1) gebildet wird, dadurch gekennzeichnet, daß das die Führung (2) bildende U-Profil durch Extrusion eines für dieses Herstellungsverfahren geeigneten Materials hergestellt ist und daß die Befestigungsmittel (3, 4) im Querschnitt jeweils U-förmig mit einem an dem Fahrzeug, vorzugsweise seinem Boden, zu befestigenden unteren Abschnitt (22) und Flanschen (21), die in nach innen gebogenen Abschnitten (27) enden, sind, wobei die Befestigungsmittel (3, 4) durch Walzen von Blech, vorzugsweise Stahl, hergestellt sind und die Führung (2) und die Befestigungsmittel (3, 4) in einer Position aneinander befestigt sind, in der die Flansche (21) der Befestigungsmittel (3, 4) außerhalb der entsprechenden Flansche (12) der Führung (2) liegen und die gebogenen Abschnitte (27) in Eingriff mit den entsprechenden Rillen (15) der Führung (2) stehen, so daß die Führung (2) und die Befestigungsmittel (3, 4) über beinahe die gesamte Länge der gebogenen Abschnitte (27) der entsprechenden Befestigungsmittel (3, 4) in Kontakt miteinander stehen.

2. Anordnung nach Anspruch 1, dadurch gekennzeichnet, daß an dem die Führung (2) bildenden U-Profil die äußeren Kanten der Flansche (12) zueinander geneigt sind, und daß die Verbindung zwischen der Führung (2) und dem Schlitten (5) über das Linear-Rollenlager (17, 43, 44) angrenzend an die Unterseite (13) des Profiles an jeder Schnittstelle zwischen der Unterseite und dem entsprechenden Flansch angeordnet ist, wodurch, falls der Schlitten (5) großen Kräften in einer Richtung weg von der Führung (2) ausgesetzt ist und letztere in einem Bogen weg von ihrem Befestigungsmittel gebogen wird, die Flansche (12) der Führung die Tendenz haben werden, sich um den zwischen ihnen befindlichen Schlitten zu schließen.

## Revendications

1. Agencement pour sièges de véhicule, qui sont pourvus d'un châssis inférieur (1), reliant le siège (8) à la partie principale du véhicule, de préférence par l'intermédiaire de son plancher, et comprenant un guide (2) présentant une section transversale en forme de U avec une partie de fond (13) et deux rebords (12), ledit guide (2) étant muni de rainures (15) sur les extérieurs des rebords (12) et disposées l'une à l'opposé de l'autre, ledit guide (2) étant fixé au véhicule par des moyens de fixation (3,4), et une glissière (5) prévue pour être reliée au siège, le guide (2) et la glissière (5) étant reliés au moyen d'un palier linéaire (17,43,44) du type à rouleau de façon à former une unité de glissière du châssis inférieur (1), caractérisé en ce que le profil en U formant le guide (2) est fabriqué par extrusion dans une matière convenant à ce procédé de fabrication et en ce que les moyens de fixation (3,4) ont chacun en section transversale une forme en U ayant une partie de fond (22) prévue pour être attachée au véhicule, de préférence à son plancher, et des rebords (21) se terminant en parties recourbées vers l'intérieur (27), les moyens de fixation (3,4) étant fabriqués par laminage en feuille de préférence à partir d'acier, le guide (2) et les moyens de fixation (3,4) étant fixés l'un à l'autre dans une position dans laquelle les rebords (21) des moyens de fixation (3,4) sont situés à l'extérieur des rebords respectifs (12) du guide (2), lesdites parties recourbées (27) s'engageant dans lesdites rainures respectives (15) du guide (2), de façon que le guide (2) et les moyens de fixation (3,4) soient en contact l'un avec l'autre sur presque toute la longueur desdites parties recourbées (27) des moyens de fixation respectifs (3,4).

2. Agencement selon la revendication 1, caractérisé en ce que les bords extérieurs des rebords dudit profil en U formant le guide (2) sont inclinés l'un vers l'autre et en ce que la liaison entre le guide (2) et la glissière (5) par l'intermédiaire dudit palier à rouleaux linéaire (17,43,44) est disposée adjacente au fond (13) du profil à chaque intersection entre le fond et le rebord respectif, moyennant quoi, si la glissière (5) est sujette à de grandes forces dans une direction éloignée du guide (2) et que ce dernier va se courber en arc à l'opposé de ses moyens de fixation, alors les rebords (12) du guide auront tendance à se fermer autour de la glissière qui est entre eux.
